# EUROPEAN PATENT APPLICATION

(11) **EP 4 564 869 A1**
(43) Date of publication of application: **04.06.2025**
(21) Application number: 22952281.8
(22) Date of filing: 26.07.2022
(51) Int. Cl.: H04W 8/24, H04W 72/04

(54) **INFORMATION PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Dehns Germany Partnerschaft mbB
(86) International application number: PCT/CN2022/108056
(87) International publication number: WO 2024/020816

(57) **Abstract**

Provided in the embodiments of the present disclosure are an information processing method and apparatus, and a communication device and a storage medium. The information processing method executed by a terminal device having a plurality of antenna panels may comprise: reporting relevant capability information to a base station, wherein the relevant capability information indicates whether the terminal device supports simultaneous transmission via multi-panel (STxMP), and a transmission characteristic report of each antenna panel.

## Description

### TECHNICAL FILED

The present disclosure relates to, but is not limited to, the field of wireless communication technologies, and in particular, to a method and device for processing information, a communication device, and a storage medium.

### BACKGROUND

Physical Uplink Shared Channel (PUSCH) transmissions are directed towards Transmission and Reception Points (TRPs) of multiple base stations.

For example, in Time-Division Multiplexing (TDM) transmission-based multi-TRP cooperative transmission, different repetitions of the same information on the PUSCH are sent to different TRPs of the base station at different Transmission Occasions (TOs) in the time domain. This method has relatively low requirements for terminal capabilities and does not require the terminal to have the ability to simultaneously transmit beams via multiple antenna panels. However, the transmission delay is relatively large.

For the uplink, the PUSCH directed towards different TRPs may experience channels with significantly different spatial characteristics. Therefore, it is considered that the spatial parameter characteristics, i.e., Spatial Relation Info, of the PUSCH channels in different transmission directions are different.

If a terminal device (also referred to as User Equipment (UE)) has multiple antenna panels, it can achieve simultaneous cooperative transmission from multiple antenna panels towards multiple TRPs of the base station to increase transmission reliability and throughput and effectively reduce the PUSCH transmission delay in the multi-TRP scenario. However, this requires the terminal to have the ability to simultaneously transmit multiple beams via multiple antenna panels.

### SUMMARY

Embodiments of the present disclosure provide a method and device for processing information, a communication device, and a storage medium.

According to a first aspect of the embodiments of the present disclosure, there is provided a method for processing information, which is performed by a terminal device with multiple antenna panels. The method includes reporting relevant capability information to a base station, where the relevant capability information indicates whether the terminal device supports an uplink Simutalnenous Transmission via Multi-Panel (STxMP).

According to a second aspect of the embodiments of the present disclosure, there is provided with a method for processing information, which is performed by a base station. The method includes receiving relevant capability information reported by a terminal device, where the relevant capability information indicates whether the terminal device supports an uplink STxMP; and the terminal device is provided with multiple antenna panels.

According to a third aspect of the embodiments of the present disclosure, there is provided a device for processing information. The device includes a sending module configured to report relevant capability information to a base station, where the relevant capability information indicates whether a terminal device with multiple antenna panels supports an uplink STxMP; and the terminal device is provided with multiple antenna panels.

According to a fourth aspect of the embodiments of the present disclosure, there is provided a device for processing information. The device includes a receiving module configured to receive relevant capability information reported by a terminal device, where the relevant capability information indicates whether the terminal device supports an uplink STxMP; and the terminal device is provided with multiple antenna panels.

According to a fifth aspect of the embodiments of the present disclosure, there is provided a communication device, including a processor, a transceiver, a memory, and an executable program stored in the memory and executable by the processor. When the processor executes the executable program, the processor performs the method for processing information provided in the first or second aspect.

According to a sixth aspect of the embodiments of the present disclosure, there is provided a computer storage medium. The computer storage medium stores an executable program, and after the executable program is executed by a processor, the method for processing information provided in the first or second aspect can be implemented.

In the technical solutions provided by the embodiments of the present disclosure, the terminal device reports the relevant capability information of the antenna panels. This relevant capability information indicates whether the terminal device supports the uplink simultaneous transmission via multiple antenna panels. In this way, after receiving the relevant capability information, the network devices such as a base station can determine whether the terminal supports the uplink simultaneous transmission via multiple antenna panels. Thus, under suitable channel conditions, corresponding interference, and transmission service requirements (such as URLLC services), the terminal device can be scheduled to perform the uplink simultaneous transmission using multiple antenna panels.

It should be understood that the above general description and the following detailed description are only exemplary and explanatory and cannot limit the embodiments of the present disclosure.

### BRIEF DESCRIPTION OF THE DRAWINGS

The accompanying drawings, which are incorporated in and constitute a part of this specification, illustrate embodiments consistent with the present application and, together with the description, serve to explain the principles of the present application.
FIG. 1 is a schematic structural diagram of a wireless communication system according to an exemplary embodiment.
FIG. 2 is a schematic diagram of uplink transmission of multiple antenna panels according to an exemplary embodiment.
FIG. 3 is a schematic diagram of uplink transmission of multiple antenna panels according to an exemplary embodiment.
FIG. 4 is a schematic flowchart of a method for processing information according to an exemplary embodiment.
FIG. 5 is a schematic flowchart of a method for processing information according to an exemplary embodiment.
FIG. 6 is a schematic flowchart of a method for processing information according to an exemplary embodiment.
FIG. 7 is a schematic flowchart of a method for processing information according to an exemplary embodiment.
FIG. 8 is a schematic structural diagram of a device for processing information according to an exemplary embodiment.
FIG. 9 is a schematic structural diagram of a device for processing information according to an exemplary embodiment.
FIG. 10 is a schematic structural diagram of a terminal device according to an exemplary embodiment.
FIG. 11 is a schematic structural diagram of a communication device according to an exemplary embodiment.

### DETAILED DESCRIPTION

Hereinafter, exemplary embodiments will be described in detail, examples of which are shown in the accompanying drawings. When the following description refers to the accompanying drawings, the same numerals in different drawings represent the same or similar elements. The embodiments described below do not represent all embodiments consistent with the present application. Instead, they are only examples of devices and methods consistent with some aspects of the present application.

The terms used in the embodiments of the present disclosure are only for the purpose of describing specific embodiments and are not intended to limit the embodiments of the present disclosure. The singular forms "a," "an," and "the" used in the present disclosure are also intended to include plural forms unless the context clearly indicates otherwise. It should also be understood that the term "and/or" used herein refers to and includes any or all possible combinations of one or more of the associated listed items.

It should be understood that although terms such as "first," "second," and "third" may be used to describe various information in the embodiments of the present disclosure, these information should not be limited by these terms. These terms are only used to distinguish the same type of information from one another. For example, without departing from the scope of the embodiments of the present disclosure, the first information can also be called the second information, and similarly, the second information can also be called the first information. Depending on the context, the word "if" used herein can be interpreted as "when...," "while...," or "in response to determining...".

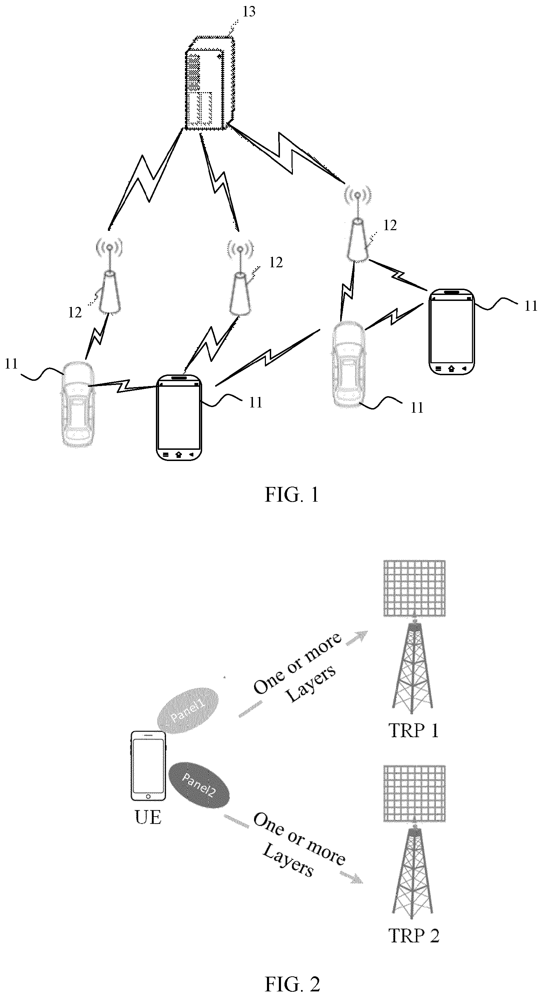

Please refer to FIG. 1, which shows a schematic structural diagram of a wireless communication system provided by the embodiments of the present disclosure. As shown in FIG. 1, the wireless communication system is a communication system based on cellular mobile communication technology and may include: several UEs 11 and several access devices 12.

The UE 11 can be a device that provides voice and/or data connectivity to users. The UE 11 can communicate with one or more core networks via a Radio Access Network (RAN). The UE 11 can be an Internet of Things UE, such as a sensor device, a mobile phone (or called a "cellular" phone), and a computer with Internet of Things UE. For example, it can be a fixed, portable, pocket-sized, handheld, computer-integrated, or vehicle-mounted device. For example, it can be a Station (STA), subscriber unit, subscriber station, mobile station, mobile, remote station, access point, remote terminal (UE), access terminal (access UE), user terminal, user agent, user device, or User Equipment (UE). Alternatively, the UE 11 can also be a device of an unmanned aerial vehicle. Alternatively, the UE 11 can also be a vehicle-mounted device, such as a driving computer with wireless communication function or a wireless communication device connected to an external driving computer. Alternatively, the UE 11 can also be a roadside device, such as a streetlight, a traffic light, or other roadside devices with wireless communication function.

The access device 12 can be a network-side device in the wireless communication system. The wireless communication system can be a 4th generation mobile communication (4G) system, also known as Long Term Evolution (LTE) system; or, the wireless communication system can also be a 5G system, also known as New Radio (NR) system or 5G NR system; or, the wireless communication system can also be the next-generation system after the 5G system. The access network in the 5G system can be called New Generation-Radio Access Network (NG-RAN). Alternatively, it can be an MTC system.

The access device 12 can be an evolved access device (eNB) adopted in the 4G system. Alternatively, the access device 12 can also be an access device (gNB) with a centralized and distributed architecture adopted in the 5G system. When the access device 12 adopts a centralized and distributed architecture, it usually includes a Central Unit (CU) and at least two Distributed Units (DUs). The protocol stack of the Packet Data Convergence Protocol (PDCP) layer, the Radio Link Control (RLC) layer, and the Media Access Control (MAC) layer is set in the Central Unit, and the protocol stack of the Physical (PHY) layer is set in the Distributed Unit. The specific implementation of the access device 12 is not limited in the embodiments of the present disclosure.

A wireless connection can be established between the access device 12 and the UE 11 through a wireless air interface. In different embodiments, the wireless air interface is a wireless air interface based on the 4G standard of the fourth-generation mobile communication network technology; or, the wireless air interface is a wireless air interface based on the 5G standard of the fifth-generation mobile communication network technology, such as the New Radio; or, the wireless air interface can also be a wireless air interface based on the standard of the next-generation mobile communication network technology after 5G.

As shown in FIG. 2, the transmission of PUSCH can be scheduled by a single Physical Downlink Control Channel (PDCCH), i.e., Single Downlink Information (S-DCI), for the terminal to transmit PUSCH from multiple antenna panels (or simply "panels") to different TRPs of the base station.

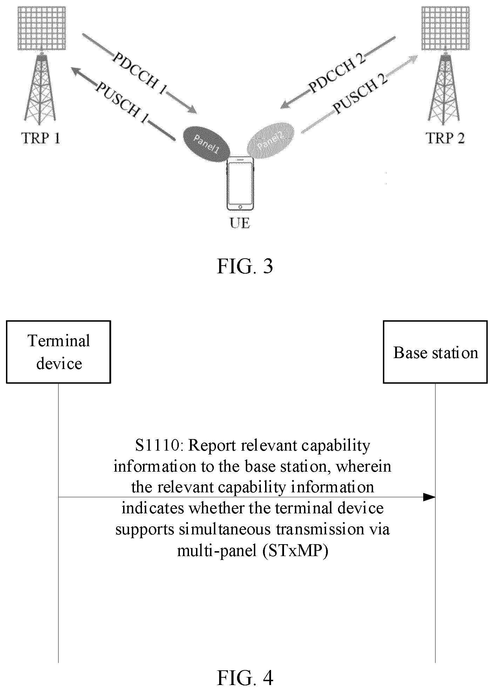

As shown in FIG. 3, the transmission of PUSCH can also be scheduled by different PDCCHs, i.e., Multi Downlink Information (M-DCI), for the terminal to transmit PUSCH from multiple panels to different TRPs of the base station.

"One or more Layers" of the PUSCH in FIG. 2 and FIG. 3 are transmitted by different PUSCH antenna ports corresponding to different panels of the terminal device.

For example, in FIG. 2 and FIG. 3, the terminal device has two antenna panels for simultaneous transmission, namely antenna panel 1 (i.e., Panel 1) and antenna panel 2 (i.e., Panel 2).

In FIG. 3, TRP1 and TRP2 schedule PUSCH1 and PUSCH2 through PDCCH1 and PDCCH2, respectively.

As shown in FIG. 4, a method for processing information provided by the embodiments of the present disclosure is performed by a terminal device with multiple antenna panels. The method includes the following steps.

S1110, reporting relevant capability information to a base station, where the relevant capability information indicates whether the terminal device supports an uplink Simultaneous Transmission via Multi-Panel (STxMP).

The terminal device provided by the embodiments of the present disclosure can be various types of electronic devices, such as mobile phones, tablets, wearable devices, vehicle-mounted devices, intelligent office devices, and/or smart home devices.

In some embodiments, the terminal device reports the relevant capability information to the base station. Accordingly, the base station can learn through the capability report whether the terminal device supports the uplink simultaneous transmission using STxMP, how many antenna panels that support the uplink simultaneous transmission, and the transmission characteristics such as the transmission directions of these antenna panels that support uplink transmission.

For example, the terminal device may have multiple physical antenna panels. Alternatively, the terminal device may have multiple virtual antenna panels. Here, the relevant capability information can indicate that the terminal device supports an uplink simultaneous transmission via multiple antenna panels, which can be a simultaneous Coherent joint transmission (C-JT) and/or a simultaneous Non-coherent joint transmission (NC-JT).

In some embodiments, the relevant capability information includes at least one of the following parameters:
a power class of the terminal device;
a number of physical antenna panels included in the terminal device;
transmission direction information supported by each antenna panel;
a maximum number of Sounding Reference Signal (SRS) ports supported by each antenna panel;
a maximum number of uplink Multiple Input Multiple Output (MIMO) layers supported by each antenna panel;
correlation characteristic information for indicating a correlation between antenna ports included in the antenna panel;
switching delay information between different antenna panels of the multiple antenna panels;
information related to whether the terminal device supports an uplink transmission of multiple antenna panels.

The power class of the terminal device can reflect the overall power class of the terminal device or the power class of each antenna panel included in the terminal device.

This power class can reflect the transmit power of the terminal device as a whole and/or of a single antenna panel.

**Table 1 is a mapping table between power classes and terminal device types.**

| UE Power class | UE type |
|---|---|
| 1 | Fixed wireless access (FWA) UE |
| 2 | Vehicular UE |
| 3 | Handheld UE |
| 4 | High power non-handheld UE |
| 5 | Fixed wireless access (FWA) UE |
| 6 | High Speed Train Roof-Mounted UE |
| 7 | RedCap UE |

The number of physical antenna panels included in the terminal device can be at least one of the following:
a total number of all of the physical antenna panels included in the terminal device; or
a total number of available physical antenna panels included in the terminal device. For example, some antenna panels of the terminal device may be faulty or used for other communications (e.g., non-New Radio (NR) communications), such as Wi-Fi communications. Even if the information of such antenna panels is reported to the base station, it is not available, so there is no need to count them as the available physical antenna panels and report them to the base station.

In some embodiments, some antenna panels only support single-direction transmission. For example, some antenna panels support both uplink and downlink transmissions, while other antenna panels only support downlink transmission. In this case, the transmission direction information can be used by the terminal device to indicate the transmission directions supported by all the antenna panels it includes.

An antenna panel can support the transmission from one SRS antenna port, but it can also have the transmission capability of multiple SRS antenna ports. Furthermore, during information transmission, one antenna port can correspond to the transmission capability of one data stream.

The number of MIMO layers supported by an antenna panel also determines the number of data streams that can be simultaneously transmitted by the antenna panel. Usually, the maximum number of MIMO layers is equal to the maximum number of SRS ports.

If an antenna panel has multiple antenna ports, whether there is a correlation between these antenna ports can be indicated by the correlation characteristic information. The correlation between antenna ports can include cases such as: fully correlated, partially correlated, or non-correlated.

In the embodiments of the present disclosure, if the correlation between the antenna ports of a single antenna panel and/or multiple antenna panels is detailed, different antenna ports can be scheduled for C-JT and/or NC-JT according to requirements.

In some cases, the terminal device can simultaneously activate multiple antenna panels. However, it may also be limited by the software and hardware capabilities of the terminal device and/or considering power consumption savings of the terminal device.

In one embodiment, the power class includes:
a maximum transmit power or maximum transmit power class supported by the terminal device; or,
a maximum transmit power or maximum transmit power class supported by each antenna panel; or,
a maximum transmit power or maximum transmit power class supported by the terminal device, and a maximum transmit power or maximum transmit power class supported by each antenna panel.

For example, the terminal device can determine the maximum transmit power or maximum transmit power class according to its own hardware capabilities. After the maximum transmit power or maximum transmit power class of the terminal device is reported to the base station, the base station can determine the maximum transmit power configured to the terminal for use in transmission according to needs and/or the transmit capabilities of each antenna panel.

The terminal device determines the specific maximum transmit power or maximum transmit power class supported by the PUSCH sent on each antenna panel according to the maximum transmit power configured by the network for the terminal.

In another embodiment, the power class (i.e., power class information) carries the maximum transmit power or maximum transmit power class of each antenna panel. Thus, after receiving an allocation coefficient, the network device determines the transmit power or transmit power class that can be allocated to each antenna panel. Here, the determined transmit power that can be allocated to each antenna panel includes: one or more transmit powers supported by each antenna panel. Here, the determined transmit power class that can be allocated to each antenna panel includes: one or more transmit power classes supported by each antenna panel.

For example, after receiving the allocation coefficient, the network device determines the maximum transmit power or maximum transmit power class that can be allocated to each antenna panel according to the allocation coefficient.

In yet another embodiment, the maximum transmit power/maximum transmit power class supported by the terminal device, and the maximum transmit power/maximum transmit power class supported by each antenna panel, are both reported to the network devices such as the base station. Thus, the base station can determine the maximum transmit power configured for the terminal transmission according to the maximum transmit power class/maximum transmit power supported by the terminal device and the maximum transmit power/maximum transmit power class supported by each antenna panel.

In some embodiments, the terminal device can determine the maximum transmit power or maximum transmit power class according to its own hardware capabilities. After the maximum transmit power class or maximum transmit power of the terminal device is reported to the base station, the base station can determine the maximum transmit power configured to the terminal for use in transmission according to needs and/or the transmit capabilities of each antenna panel.

In one embodiment, the relevant capability information also includes: power allocation information, where the power allocation information is used for allocating power among multiple antenna panels of the terminal device.

The power allocation information can be used by network devices such as the base station to determine the power allocation for the uplink simultaneous transmission of multiple antenna panels of the terminal device.

The specific information content of the power allocation information has multiple types. The following provides several options.

The power allocation information includes, but is not limited to, one of the following:
allocation method information for determining to allocate the maximum transmit power or maximum transmit power class supported by the terminal device to the multiple antenna panels according to a predefined allocation method or an instruction from the base station;
an allocation coefficient for indicating a power allocation ratio among the multiple antenna panels within the terminal device.

For example, when the power class includes the maximum transmit power or maximum transmit power class supported by the terminal device, the relevant capability information further includes the power allocation information.

If the power allocation information includes the allocation method information, this allocation method can indicate one of the predefined allocation as the way to allocate power among the multiple antenna panels of the terminal device for this instance.

The predefined allocation methods include, but are not limited to: equal allocation, allocation according to a predetermined coefficient, or allocation according to an allocation coefficient that is determined by the network device on the network side dynamically based on the current wireless environment.

In another embodiment, the terminal device directly reports the allocation coefficient, which directly indicates the expected allocation ratio of the terminal device. Thus, after receiving the allocation coefficient, the network device such as the base station determines the maximum transmit power configured to the terminal for use in transmission.

In some embodiments, the transmission direction information supported by the antenna panel includes:
information of the antenna panel that supports downlink reception; and/or,
information of the antenna panel that supports uplink transmission and downlink reception.

In the embodiments of the present disclosure, the transmission direction supported by the information of the antenna panel can facilitate the network device to schedule the antenna panels that support uplink transmission to complete the uplink transmission according to needs. Here, the information of the antenna panel can include: the identifier of the antenna panel and/or information on whether the antenna panel has uplink transmission capability, among other antenna panel information.

In some embodiments, the correlation characteristic information includes:
the correlation characteristic information between different antenna ports within a single antenna panel; and/or,
the correlation characteristic information between antenna ports included in different antenna panels.

In some embodiments, when an antenna panel (e.g., a physical antenna panel) has multiple antenna ports, these antenna ports may be correlated or non-correlated.

For example, if the correlation characteristic information indicates that different antenna ports within the same antenna panel are correlated, the correlated antenna ports within the antenna panel can perform a C-JT.

Another example is that if the correlation characteristic information indicates that different antenna ports within the same antenna panel are non-correlated, multiple antenna ports within the antenna panel can perform a simultaneous NC-JT.

In the embodiments of the present disclosure, the correlation characteristic information not only involves the correlation between antenna ports of a single antenna panel but also includes a description of the correlation characteristics between multiple antenna ports included in multiple antenna panels.

In this way, the network device can schedule the terminal device to perform the C-JT or NC-JT for uplink synchronous transmission using antenna ports of multiple antenna panels, or the terminal device can schedule multiple antenna ports of multiple antenna panels for uplink synchronous transmission.

In one embodiment, the correlation characteristic information indicates a correlation type, and different correlation types map to different correlation characteristics.

The correlation characteristics include at least one of the following:
fully correlated;
partially correlated; or
non-correlated.

In some embodiments, the correlation characteristic information can be used to indicate various correlation characteristic types.

For example, the correlation characteristic types between antenna ports of the same antenna panel can include at least one of the following:
Type 1: the antenna ports of the same antenna panel can achieve three correlation characteristics, i.e., fully correlated, partially correlated, and non-correlated;
Type 2: the antenna ports of the same antenna panel can achieve two correlation characteristics, i.e., partially correlated and non-correlated;
Type 3: the antenna ports of the same antenna panel only indicate non-correlated.

For example, the correlation characteristic types between antenna ports of different antenna panels include at least one of the following:
Type 1: all of the antenna ports of different antenna panels are fully correlated;
Type 2: some of the antenna ports of different antenna panels are partially correlated;
Type 3: the antenna ports of different antenna panels are non-correlated.

Another example is that the correlation characteristic types between antenna ports of different antenna panels include at least one of the following:
Type 1: the antenna ports of the same antenna panel can achieve three correlation characteristics, i.e., fully correlated, partially correlated, and non-correlated;
Type 2: the antenna ports of the same antenna panel can achieve two correlation characteristics, i.e., partially correlated and non-correlated;
Type 3: the antenna ports of the same antenna panel only indicate non-correlated.

In some embodiments, the switching delay information indicates the switching gap period or switching delay class between the activated antenna panels.

The antenna panels have multiple states, including an inactive state, an activated state, and an operating state.

The inactive state and the activated state are both non-operating states. By performing an activation operation, an antenna panel in the inactive state can be activated, thereby transitioning the antenna panel into the activated state. For example, initializing the antenna panel or configuring antenna parameters can achieve the switch from the inactivate state to the activated state of the antenna panel.

In the embodiments of the present disclosure, the switching delay information indicates: the switching gap period or switching delay class between the activated antenna panels, which can facilitate the network-side device to determine at an appropriate time whether to instruct the switching between the activated antenna panels within the terminal device, according to the transmission requirements.

In other embodiments, the switching delay information can also indicate the switching gap period or switching delay class between the inactive antenna panels.

In still other embodiments, the switching delay information can also indicate the switching gap period or switching delay class between the inactive antenna panel and the activated antenna panel.

The switching between antenna panels in the embodiments of the present disclosure can be considered as: the switching of the antenna panels in the operating state within the terminal device.

In some embodiments, the relevant capability information of the antenna panels within the terminal device is reported through at least one of the following signaling:
Radio Resource Control (RRC) signaling;
Media Access Control-Control Element (MAC-CE); or
Uplink Control Information (UCI).

The above relevant capability information can be carried in the RRC signaling, MAC-CE, or UCI of the terminal device and reported to the network devices such as the base station. In specific implementation, the signaling carrying the relevant capability information is not limited to the above signaling.

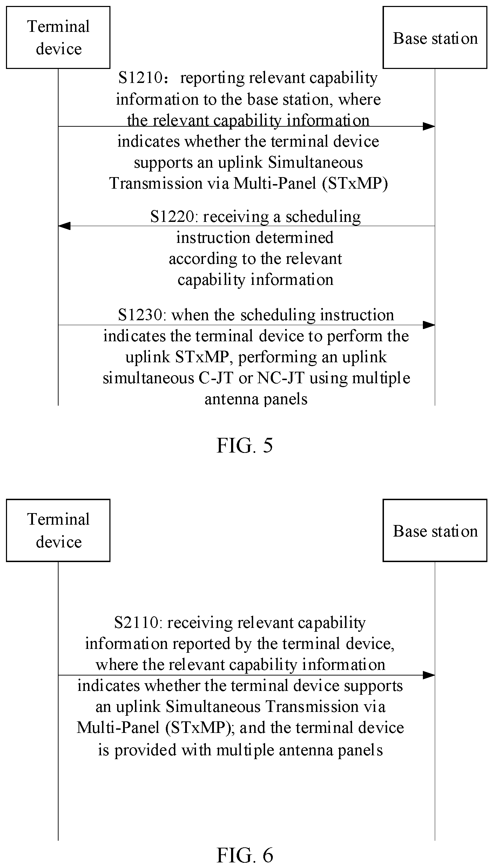

As shown in FIG. 5, similar to FIG. 4, a method for processing information provided by the embodiments of the present disclosure is performed by a terminal device with multiple antenna panels. The method includes the following steps.

S1210, reporting relevant capability information to a base station, where the relevant capability information indicates whether the terminal device supports an uplink Simultaneous Transmission via Multi-Panel (STxMP).

S1220, receiving a scheduling instruction determined according to the relevant capability information.

S1230, when the scheduling instruction indicates the terminal device to perform the uplink STxMP, performing an uplink simultaneous C-JT or NC-JT using multiple antenna panels.

It should be noted that the above multiple embodiments performed by the UE can be implemented independently or in combination, and the embodiments of the present disclosure do not limit this.

As shown in FIG. 6, a method for processing information provided by the embodiments of the present disclosure is performed by a base station. The method includes the following steps.

S2110, receiving relevant capability information reported by a terminal device, where the relevant capability information indicates whether the terminal device supports an uplink Simultaneous Transmission via Multi-Panel (STxMP); and the terminal device is provided with multiple antenna panels.

The base station can receive the relevant capability information sent by the terminal device. This relevant capability information can be used by the base station to determine whether the terminal device supports the uplink simultaneous transmission via multiple antenna panels. If the terminal device supports the uplink simultaneous transmission via multiple antenna panels, when scheduling the transmission of the terminal device, the base station can schedule the terminal device that supports the uplink simultaneous transmission via multiple antenna panels to perform the uplink simultaneous transmission using multiple antenna panels when there is a need.

In some embodiments, the relevant capability information includes at least one of the following parameters:
a power class of the terminal device, which can reflect the overall power class of the terminal device or the power class of each antenna panel included in the terminal device;
where this power class can reflect the transmit power of the terminal device as a whole and/or of a single antenna panel;
a number of physical antenna panels included in the terminal device, which can specifically be at least one of the following:
   a total number of all of the physical antenna panels included in the terminal device; or
   a total number of available physical antenna panels included in the terminal device.

The total number of available physical antenna panels included in the terminal device means that some of the antenna panels of the terminal device may be faulty or unavailable or used for other communications, such as antenna panels used for Wi-Fi communication (e.g., non-NR communication). Even if the information of such antenna panels is reported to the base station, it is not available, so there is no need to count them as the available physical antenna panels and report them to the base station.

In some embodiments, some antenna panels only support single-direction transmission. For example, some antenna panels support both uplink and downlink transmissions, while other antenna panels only support downlink transmission. In this case, the transmission direction information can be used by the terminal device to indicate the transmission directions supported by all the antenna panels it includes.

An antenna panel can support the transmission from one SRS antenna port, but it can also have the transmission capability of multiple SRS antenna ports. Furthermore, during information transmission, one antenna port can correspond to the transmission capability of one data stream.

The number of MIMO layers supported by an antenna panel also determines the number of data streams that can be simultaneously transmitted by the antenna panel. Usually, the maximum number of MIMO layers is equal to the maximum number of SRS ports.

If an antenna panel has multiple antenna ports, whether there is a correlation between these antenna ports can be indicated by the correlation characteristic information. The correlation between antenna ports can include cases such as: fully correlated, partially correlated, or non-correlated.

In the embodiments of the present disclosure, if the correlation between the antenna ports of a single antenna panel and/or multiple antenna panels is detailed, different antenna ports can be scheduled for C-JT and/or NC-JT according to requirements.

In some cases, the terminal device can simultaneously activate multiple antenna panels. However, it may also be limited by the software and hardware capabilities of the terminal device and/or considering power consumption savings of the terminal device.

In one embodiment, the power class includes:
a maximum transmit power or maximum transmit power class supported by the terminal device; or,
a maximum transmit power or maximum transmit power class supported by each antenna panel; or,
a maximum transmit power or maximum transmit power class supported by the terminal device, and a maximum transmit power or maximum transmit power class supported by each antenna panel.

In some embodiments, the terminal device can determine the maximum transmit power or maximum transmit power class according to its own hardware capabilities. After the maximum transmit power or maximum transmit power class of the terminal device is reported to the base station, the base station can determine the maximum transmit power configured for the terminal transmission according to needs and/or the transmit capabilities of each antenna panel.

The terminal device determines the specific maximum transmit power or maximum transmit power class supported by the PUSCH sent on each antenna panel according to the maximum transmit power configured by the network for the terminal.

In another embodiment, the power class (i.e., power class information) carries the maximum transmit power or maximum transmit power class of each antenna panel. Thus, after receiving an allocation coefficient, the network device determines the transmit power or transmit power class that can be allocated to each antenna panel. Here, the determined transmit power that can be allocated to each antenna panel includes: one or more transmit powers supported by each antenna panel. Here, the determined transmit power class that can be allocated to each antenna panel includes: one or more transmit power classes supported by each antenna panel.

For example, after receiving the allocation coefficient, the network device determines the maximum transmit power or maximum transmit power class that can be allocated to each antenna panel according to the allocation coefficient.

In yet another embodiment, the maximum transmit power/maximum transmit power class supported by the terminal device, and the maximum transmit power/maximum transmit power class supported by each antenna panel, are both reported to the network devices such as the base station. Thus, the base station can determine the maximum transmit power configured for the terminal transmission according to the maximum transmit power class/maximum transmit power supported by the terminal device and the maximum transmit power/maximum transmit power class supported by each antenna panel.

In some embodiments, the terminal device can determine the maximum transmit power or maximum transmit power class according to its own hardware capabilities. After the maximum transmit power class or maximum transmit power of the terminal device is reported to the base station, the base station can determine the maximum transmit power configured to the terminal for use in transmission according to needs and/or the transmit capabilities of each antenna panel.

In one embodiment, the relevant capability information also includes: power allocation information, where the power allocation information is used for allocating power among multiple antenna panels of the terminal device.

The power allocation information can be used by network devices such as the base station to determine the power allocation for the uplink simultaneous transmission via multiple antenna panels of the terminal device.

The specific information content of the power allocation information has multiple types. The following provides several options.

The power allocation information includes, but is not limited to, one of the following:
allocation method information for determining to allocate the maximum transmit power or maximum transmit power class supported by the terminal device to the multiple antenna panels according to a predefined allocation method or an instruction from the base station;
an allocation coefficient for indicating a power allocation ratio among the multiple antenna panels within the terminal device.

For example, when the power class includes the maximum transmit power or maximum transmit power class supported by the terminal device, the relevant capability information further includes the power allocation information.

If the power allocation information includes the allocation method information, this allocation method can indicate one of the predefined allocation as the way to allocate power among the multiple antenna panels of the terminal device for this instance.

The predefined allocation methods include, but are not limited to: equal allocation, allocation according to a predetermined coefficient, or allocation according to an allocation coefficient that is determined by the network device on the network side dynamically based on the current wireless environment.

In another embodiment, the terminal device directly reports the allocation coefficient, which directly indicates the expected allocation ratio of the terminal device. Thus, after receiving the allocation coefficient, the network devices such as the base station directly allocate the transmit power among multiple antenna panels according to the ratio corresponding to the allocation coefficient, within a transmit power range corresponding to the maximum transmit power or maximum transmit power class supported by the terminal device.

In some embodiments, the transmission direction information supported by the antenna panel includes:
information of the antenna panel that supports downlink reception; and/or,
information of the antenna panel that supports uplink transmission and downlink reception.

In the embodiments of the present disclosure, the transmission direction supported by the information of the antenna panel can facilitate the network device to schedule the antenna panels that support uplink transmission to complete the uplink transmission according to needs. Here, the information of the antenna panel can include: the identifier of the antenna panel and/or information on whether the antenna panel has uplink transmission capability, among other antenna panel information.

In some embodiments, the correlation characteristic information includes:
the correlation characteristic information between different antenna ports within a single antenna panel; and/or,
the correlation characteristic information between antenna ports included in different antenna panels.

In some embodiments, when an antenna panel (e.g., a physical antenna panel) has multiple antenna ports, these antenna ports may be correlated or non-correlated.

For example, if the correlation characteristic information indicates that different antenna ports within the same antenna panel are correlated, the correlated antenna ports within the antenna panel can perform a C-JT.

Another example is that if the correlation characteristic information indicates that different antenna ports within the same antenna panel are non-correlated, multiple antenna ports within the antenna panel can perform a simultaneous NC-JT.

In the embodiments of the present disclosure, the correlation characteristic information not only involves the correlation between antenna ports of a single antenna panel but also includes a description of the correlation characteristics between multiple antenna ports included in multiple antenna panels.

In this way, the network device can schedule the terminal device to perform the C-JT or NC-JT for uplink synchronous transmission using antenna ports of multiple antenna panels, or the terminal device can schedule multiple antenna ports of multiple antenna panels for uplink synchronous transmission.

In one embodiment, the correlation characteristic information indicates a correlation type, and different correlation types map to different correlation characteristics.

The correlation characteristics include at least one of the following:
fully correlated;
partially correlated; or
non-correlated.

In some embodiments, the correlation characteristic information can be used to indicate various correlation characteristic types.

For example, the correlation characteristic types between antenna ports of the same antenna panel can include at least one of the following:
Type 1: the antenna ports of the same antenna panel can achieve three correlation characteristics, i.e., fully correlated, partially correlated, and non-correlated;
Type 2: the antenna ports of the same antenna panel can achieve two correlation characteristics, i.e., partially correlated and non-correlated;
Type 3: the antenna ports of the same antenna panel only indicate non-correlated.

For example, the correlation characteristic types between antenna ports of different antenna panels include at least one of the following:
Type 1: all of the antenna ports of different antenna panels are fully correlated;
Type 2: some of the antenna ports of different antenna panels are partially correlated;
Type 3: the antenna ports of different antenna panels are non-correlated.

Another example is that the correlation characteristic types between antenna ports of different antenna panels include at least one of the following:
Type 1: the antenna ports of the same antenna panel can achieve three correlation characteristics, i.e., fully correlated, partially correlated, and non-correlated;
Type 2: the antenna ports of the same antenna panel can achieve two correlation characteristics, i.e., partially correlated and non-correlated;
Type 3: the antenna ports of the same antenna panel only indicate non-correlated.

In some embodiments, the switching delay information indicates the switching gap period or switching delay class between the activated antenna panels.

The antenna panels have multiple states, including an inactive state, an activated state, and an operating state.

The inactive state and the activated state are both non-operating states. By performing an activation operation, an antenna panel in the inactive state can be activated, thereby transitioning the antenna panel into the activated state. For example, initializing the antenna panel or configuring antenna parameters can achieve the switch from the inactivate state to the activated state of the antenna panel.

In the embodiments of the present disclosure, the switching delay information indicates: the switching gap period or switching delay class between the activated antenna panels, which can facilitate the network-side device to determine at an appropriate time whether to instruct the switching between the activated antenna panels within the terminal device, according to the transmission requirements.

In other embodiments, the switching delay information can also indicate the switching gap period or switching delay class between the inactive antenna panels.

In still other embodiments, the switching delay information can also indicate the switching gap period or switching delay class between the inactive antenna panel and the activated antenna panel.

The switching between antenna panels in the embodiments of the present disclosure can be considered as: the switching of the antenna panels in the operating state within the terminal device.

In some embodiments, the relevant capability information of the antenna panels within the terminal device is received through at least one of the following signaling:
Radio Resource Control (RRC) signaling;
Media Access Control-Control Element (MAC-CE); or
Uplink Control Information (UCI).

The above relevant capability information can be carried in the RRC signaling, MAC-CE, or UCI of the terminal device and reported to the network devices such as the base station. In specific implementation, the signaling carrying the relevant capability information is not limited to the above signaling.

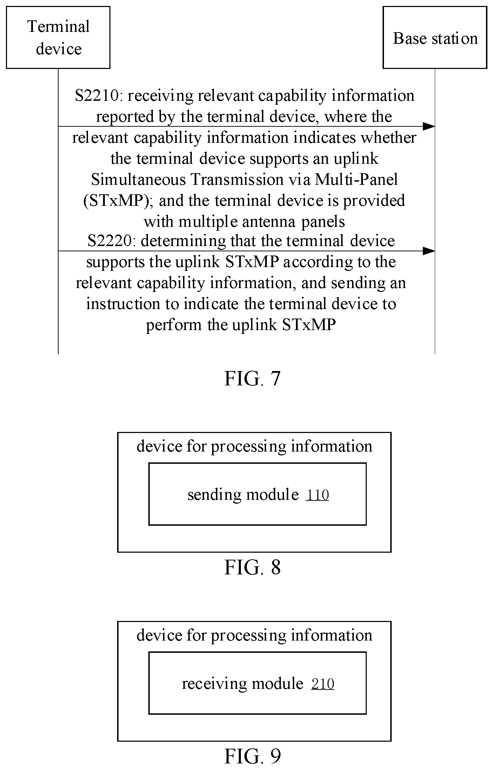

As shown in FIG. 7, a method for processing information provided by the embodiments of the present disclosure is performed by network devices such as a base station. The method includes the following steps.

S2210, receiving relevant capability information reported by a terminal device, where the relevant capability information indicates whether the terminal device supports an uplink Simultaneous Transmission via Multi-Panel (STxMP); and the terminal device is provided with multiple antenna panels.

S2220, determining that the terminal device supports the uplink STxMP according to the relevant capability information, and sending an instruction to indicate the terminal device to perform the uplink STxMP.

This method considers the implementation of the uplink simultaneous transmission towards multiple TRPs through a terminal device with multiple antenna panels (or simply "panels"), which is used to further improve the uplink system transmission throughput and transmission reliability.

Before the network configures the terminal device to perform simultaneous transmission via multiple panels, the terminal device needs to report its own information related to the capability to support uplink simultaneous transmission via multiple panels. Therefore, it is necessary to define the relevant capabilities that the terminal device should report and the method for reporting them.

In order to support network-side scheduling of the terminal device for uplink STxMP, the embodiments of the present disclosure consider the reporting of the relevant capability information of the multiple panels by the terminal device. The reporting method is as follows.

The reported parameters can include at least one or more combinations of the following parameters.

A power class of the terminal device. For example, enhanced definitions include at least the power class of the terminal device configured for a single antenna panel, including at least one or more of the following:
a total transmit power or power class of the terminal device, with the power being evenly allocated among different panels that support the uplink simultaneous transmission by default;
a total transmit power or power class of the terminal device, supporting dynamic allocation of the power among the multiple panels that support the uplink simultaneous transmission.

Simultaneously, the power allocation coefficient among multiple panels can be reported, along with the maximum transmit power or power class of different panels of the terminal device. Specifically, he maximum transmit power value or power class corresponding to each panel independently can be reported.

A total transmit power or power class of the terminal device as well as the maximum transmit power or power class of different antenna panels of the terminal device.

The number of physical antenna panels of the terminal device, where the physical antenna panels includes the antenna panels that only support downlink reception.

The number of antenna panels that can be used for uplink independent transmission, that is, the number of antenna panels that support independent Power amplifier (PA).

The maximum number of SRS ports supported by each antenna panel or the maximum number of MIMO layers supported by each antenna panel.

Correlation characteristics of antenna ports of each antenna panel. The reported correlation characteristic types of each antenna panel include one of the following:
Type 1: supporting fully correlated (FC), partially correlated (PC), and non-correlated (NC);
Type 2: supporting partially correlated (PC) and non-correlated (NC);
Type 3: non-correlated (NC).

Correlation characteristics of antenna ports among different antenna panels. The reported correlation characteristic types among antenna panels include one of the following:
Method 1.
   Type 1: fully correlated (FC);
   Type 2: partially correlated (PC);
   Type 3: non-correlated (NC).
Method 2.
   Type 1: supporting fully correlated (FC), partially correlated (PC), and non-correlated (NC);
   Type 2: partially correlated (PC) and non-correlated (NC);
   Type 3: non-correlated (NC).

Switching gap period between the activated antenna panels. This parameter is mainly used for scheduling the transmission scheme among the antenna panels.

Whether the terminal device supports the uplink STxMP.

The reporting method of the terminal device can be as follows:
reporting and updating all or part of the information through RRC signaling;
reporting and updating all or part of the information through MAC-CE signaling;
reporting and updating all or part of the information through DCI signaling.

For the terminal device that supports the uplink STxMP, at least one of the above information can be added and reported to the network together with other UE capabilities, so that the network can know the capabilities of the terminal device's antenna panels and achieve more accurate scheduling of the relevant uplink simultaneous transmission.

Through the enhanced reporting of the terminal device's capabilities, the terminal device allows the network to obtain information about the support characteristics of multiple panels, so that the network can accurately schedule a more appropriate transmission scheme.

It should be noted that the above multiple embodiments performed by the base station can be implemented independently or in combination, and the present disclosure does not limit this. It should also be noted that the explanations of the terms in the above multiple embodiments performed by the base station device are the same as those in the above multiple embodiments performed by the UE, and will not be repeated here.

As shown in FIG. 8, the embodiments of the present disclosure provide a device for processing information, which includes:
a sending module 110 configured to report relevant capability information to a base station, where the relevant capability information indicates whether a terminal device with multiple antenna panels supports an uplink Simultaneous Transmission via Multi-Panel (STxMP); and the terminal device is provided with multiple antenna panels.

This device for processing information can be included in the terminal device with the multiple antenna panels.

In some embodiments, the sending module 110 can be a program module. After the program module is executed by a processor, the above operations can be performed.

In other embodiments, the sending module 110 can be a software-hardware combined module. The software-hardware combined module includes but is not limited to various programmable arrays. The programmable arrays include but are not limited to field programmable arrays and/or complex programmable arrays.

In still other embodiments, the sending module 110 can include but is not limited to a pure hardware module. The pure hardware module includes but is not limited to application-specific integrated circuits.

In some embodiments, the relevant capability information includes at least one of:
a power class of the terminal device;
a number of physical antenna panels included in the terminal device;
transmission direction information supported by each antenna panel of the multiple antenna panels;
a maximum number of Sounding Reference Signal (SRS) ports supported by each antenna panel of the multiple antenna panels;
a maximum number of uplink Multiple Input Multiple Output (MIMO) layers supported by each antenna panel of the multiple antenna panels;
correlation characteristic information for indicating a correlation between antenna ports included in the antenna panel;
switching delay information between different antenna panels of the multiple antenna panels;
information related to whether the terminal device supports an uplink transmission via multiple antenna panels.

In some embodiments, the power class includes:
a maximum transmit power or maximum transmit power class supported by the terminal device; or,
a maximum transmit power or maximum transmit power class supported by each antenna panel of the multiple antenna panels; or,
a maximum transmit power or maximum transmit power class supported by the terminal device, and a maximum transmit power or maximum transmit power class supported by each antenna panel of the multiple antenna panels.

In some embodiments, the relevant capability information further includes:
power allocation information for allocating power among the multiple antenna panels of the terminal device.

In some embodiments, the power allocation information includes:
allocation method information for determining to allocate the maximum transmit power or maximum transmit power class supported by the terminal device to the multiple antenna panels according to a predefined allocation method or an instruction from the base station; and/or
an allocation coefficient for indicating a power allocation ratio among the multiple antenna panels within the terminal device.

In some embodiments, the transmission direction information supported by the antenna panel includes:
information of the antenna panel that supports downlink reception; and/or,
information of the antenna panel that supports uplink transmission and downlink reception.

In some embodiments, the correlation characteristic information includes:
the correlation characteristic information between different antenna ports within a single antenna panel; and/or,
the correlation characteristic information between antenna ports included in different antenna panels.

In some embodiments, the correlation characteristic information indicates a correlation type, and different correlation types map to different correlation characteristics; where the correlation characteristics includes at least one of:
fully correlated;
partially correlated; or
non-correlated.

In some embodiments, the switching delay information indicates a switching gap period or a switching delay class between activated antenna panels.

In some embodiments, the relevant capability information of the antenna panels within the terminal device is reported through at least one of following signaling:
Radio Resource Control (RRC) signaling;
Media Access Control-Control Element (MAC-CE); or
Uplink Control Information (UCI).

As shown in FIG. 9, the embodiments of the present disclosure provide a device for processing information, which includes:
a receiving module 210 configured to receive relevant capability information reported by a terminal device, where the relevant capability information indicates whether the terminal device supports an uplink Simultaneous Transmission via Multi-Panel (STxMP); and the terminal device is provided with multiple antenna panels.

This device for processing information can be included in network devices such as a base station.

In some embodiments, the receiving module 210 can be a program module. After the program module is executed by a processor, the above operations can be performed.

In other embodiments, the receiving module 210 can be a software-hardware combined module. The software-hardware combined module includes but is not limited to various programmable arrays. The programmable arrays include but is not limited to field programmable arrays and/or complex programmable arrays.

In still other embodiments, the receiving module 210 can include but is not limited to a pure hardware module. The pure hardware module includes but is not limited to application-specific integrated circuits.

In some embodiments, the relevant capability information includes at least one of:
a power class of the terminal device;
a number of physical antenna panels included in the terminal device;
transmission direction information supported by each antenna panel of the multiple antenna panels;
a maximum number of Sounding Reference Signal (SRS) ports supported by each antenna panel of the multiple antenna panels;
a maximum number of uplink Multiple Input Multiple Output (MIMO) layers supported by each antenna panel of the multiple antenna panels;
correlation characteristic information for indicating a correlation between antenna ports included in the antenna panel;
switching delay information between different antenna panels of the multiple antenna panels; or
information related to whether the terminal device supports an uplink transmission via multiple antenna panels.

In some embodiments, the power class includes:
a maximum transmit power or maximum transmit power class supported by the terminal device; or,
a maximum transmit power or maximum transmit power class supported by each antenna panel of the multiple antenna panels; or,
a maximum transmit power or maximum transmit power class supported by the terminal device, and a maximum transmit power or maximum transmit power class supported by each antenna panel of the multiple antenna panels.

In some embodiments, the relevant capability information further includes:
power allocation information for allocating power among the multiple antenna panels of the terminal device.

In some embodiments, the power allocation information includes:
allocation method information for determining to allocate the maximum transmit power or maximum transmit power class supported by the terminal device to the multiple antenna panels according to a predefined allocation method or an instruction from a base station; and/or
an allocation coefficient for indicating a power allocation ratio among the multiple antenna panels within the terminal device.

In some embodiments, the transmission direction information supported by the antenna panel includes:
information of the antenna panel that supports downlink reception; and/or,
information of the antenna panel that supports uplink transmission and downlink reception.

In some embodiments, the correlation characteristic information includes:
the correlation characteristic information between different antenna ports within a single antenna panel; and/or,
the correlation characteristic information between antenna ports included in different antenna panels.

In some embodiments, the correlation characteristic information indicates a correlation type, and different correlation types map to different correlation characteristics; where the correlation characteristics include at least one of:
fully correlated;
partially correlated; or
non-correlated.

In some embodiments, the switching delay information indicates a switching gap period between activated antenna panels.

In some embodiments, the relevant capability information of the antenna panels within the terminal device is received through at least one of following signaling:
Radio Resource Control (RRC) signaling;
Media Access Control-Control Element (MAC-CE); or
Uplink Control Information (UCI).

The present disclosure provides a communication device, including:
a memory for storing instructions executable by a processor; and
a processor connected to the memory;
where the processor is configured to perform the method for processing information provided in any of the foregoing technical solutions.

The processor can include various types of storage medium, which are non-transitory computer storage medium capable of retaining information stored on them even after the communication device is powered off.

Here, the communication device includes a terminal device or a network device such as a base station.

The processor can be connected to the memory through a bus or the like to read the executable program stored in the memory to perform, for example, at least one of the methods shown in FIGS. 4 to 9.

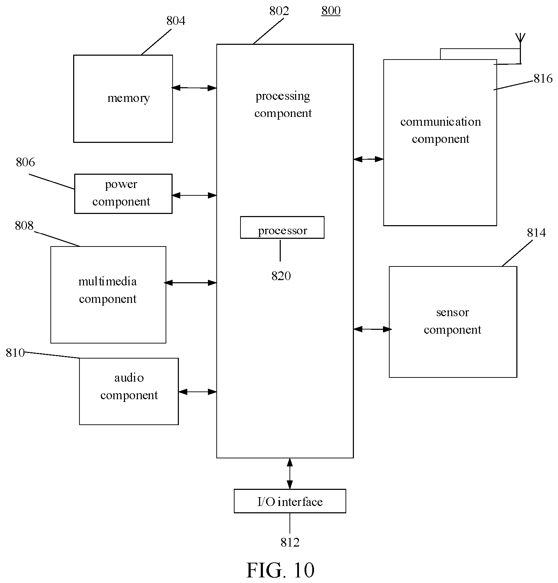

FIG. 10 is a block diagram of a terminal device 800 according to an exemplary embodiment. For example, the terminal device 800 can be a mobile phone, a computer, a digital broadcast user device, a message sending and receiving device, a game console, a tablet device, a medical device, a fitness device, a personal digital assistant, etc.

Referring to FIG. 10, the terminal device 800 can include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the terminal device 800, such as operations related to display, telephone calls, data communication, camera operations, and recording operations. The processing component 802 can include one or more processors 820 to execute instructions to generate all or part of the steps of the above methods. In addition, the processing component 802 can include one or more modules to facilitate the interaction between the processing component 802 and other components. For example, the processing component 802 can include a multimedia module to facilitate the interaction between the multimedia component 808 and the processing component 802.

The memory 804 is configured to store various types of data to support the operation of the terminal device 800. Examples of such data include instructions for any application or method operating on the terminal device 800, contact data, phone book data, messages, pictures, videos, etc. The memory 804 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, disk or optical disk.

The power component 806 provides power to various components of the terminal device 800. The power component 806 can include a power management system, one or more power supplies, and other components related to generating, managing, and distributing power for the terminal device 800.

The multimedia component 808 includes a screen that provides an output interface between the terminal device 800 and the user. In some embodiments, the screen can include a liquid crystal display (LCD) and a touch panel (TP). If the screen includes a touch panel, the screen can be implemented as a touch screen to receive input signals from the user. The touch panel includes one or more touch sensors to sense touches, slides, and gestures on the touch panel. The touch sensors can not only sense the boundaries of touch or slide actions but also detect the duration and pressure related to the touch or slide operations. In some embodiments, the multimedia component 808 includes a front camera and/or a rear camera. When the terminal device 800 is in an operation mode, such as a shooting mode or a video mode, the front camera and/or the rear camera can receive external multimedia data. Each front camera and rear camera can be a fixed optical lens system or have focal length and optical zoom capabilities.

The audio component 810 is configured to output and/or input audio signals. For example, the audio component 810 includes a microphone (MIC), and when the terminal device 800 is in an operation mode, such as a call mode, a recording mode, or a voice recognition mode, the microphone is configured to receive external audio signals. The received audio signals can be further stored in the memory 804 or sent via the communication component 816. In some embodiments, the audio component 810 also includes a speaker for outputting audio signals.

The I/O interface 812 provides an interface between the processing component 802 and peripheral interface modules. The peripheral interface modules can be keyboards, click wheels, buttons, etc. These buttons can include but are not limited to: home buttons, volume buttons, start buttons, and lock buttons.

The sensor component 814 includes one or more sensors to provide status assessment of various aspects of the terminal device 800. For example, the sensor component 814 can detect the on/off state of the device 800, the relative positioning of components, such as the display and the keypad of the terminal device 800. The sensor component 814 can also detect the position change of the terminal device 800 or a component of the terminal device 800, the presence or absence of user contact with the terminal device 800, the orientation or acceleration/deceleration of the terminal device 800, and the temperature change of the terminal device 800. The sensor component 814 can include a proximity sensor configured to detect the presence of nearby objects without any physical contact. The sensor component 814 can also include an optical sensor, such as a CMOS or CCD image sensor, for use in imaging applications. In some embodiments, the sensor component 814 can also include an acceleration sensor, a gyroscope sensor, a magnetic sensor, a pressure sensor, or a temperature sensor.

The communication component 816 is configured to facilitate wired or wireless communication between the terminal device 800 and other devices. The terminal device 800 can access a wireless network based on communication standards, such as Wi-Fi, 2G or 3G, or a combination thereof. In an exemplary embodiment, the communication component 816 receives broadcast signals or broadcast-related information from an external broadcast management system via a broadcast channel. In an exemplary embodiment, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth^{®} (BT) technology, and other technologies.

In an exemplary embodiment, the terminal device 800 can be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to execute the above methods.

In an exemplary embodiment, a non-transitory computer-readable storage medium including instructions is also provided, e.g., the memory 804 including instructions. The instructions can be executed by the processor 802 of the terminal device 800 to generate the above methods. For example, the non-transitory computer-readable storage medium can be ROM, random access memory (RAM), CD-ROM, tape, floppy disk and optical data storage device, etc.

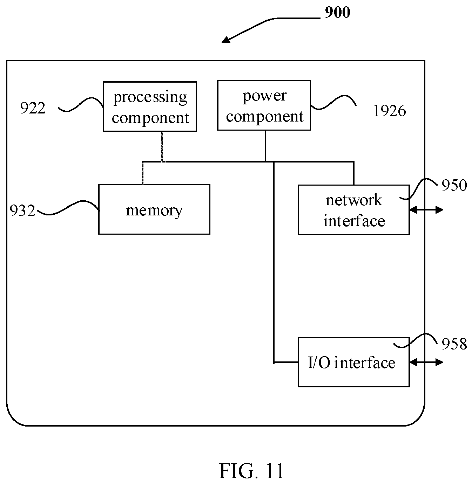

FIG. 11 shows a structure of an access device according to an exemplary embodiment of the present disclosure. For example, the communication device 900 can be provided as a network-side device. The communication device can be the aforementioned terminal device or a base station, etc.

Referring to FIG. 11, the communication device 900 includes a processing component 922, which further includes one or more processors, and a memory resource represented by a memory 932 for storing instructions executable by the processing component 922, such as application programs. The application programs stored in the memory 932 can include one or more modules each corresponding to a set of instructions. In addition, the processing component 922 is configured to execute instructions to perform any of the methods described above applicable to the access device, for example, the methods shown in any of FIGS. 4 to 7.

The communication device 900 also includes a power component 926 configured to perform power management of the communication device 900, a wired or wireless network interface 950 configured to connect the communication device 900 to a network, and an input/output (I/O) interface 958. The communication device 900 can operate based on an operating system stored in the memory 932, such as Windows Server TM, Mac OS XTM, UnixTM, LinuxTM, FreeBSDTM or similar.

Those skilled in the art will readily conceive of other embodiments of the present invention after considering the description and practicing the invention disclosed herein. The present disclosure is intended to cover any variations, uses, or adaptations of the present invention that follow the general principles of the present invention and include common knowledge or conventional technical means in the technical field not disclosed herein. The description and examples are only regarded as exemplary, and the true scope and spirit of the present invention are indicated by the following claims.

It should be understood that the present invention is not limited to the precise structure described above and shown in the drawings, and various modifications and changes can be made without departing from its scope. The scope of the present invention is only limited by the appended claims.

## Claims

1. A method for processing information, performed by a terminal device with multiple antenna panels, the method comprising:
reporting relevant capability information to a base station, wherein the relevant capability information indicates whether the terminal device supports an uplink Simultaneous Transmission via Multi-Panel, STxMP.

2. The method according to claim 1, wherein the relevant capability information comprises at least one of:
a power class of the terminal device;
a number of physical antenna panels included in the terminal device;
transmission direction information supported by each antenna panel of the multiple antenna panels;
a maximum number of Sounding Reference Signal, SRS, ports supported by each antenna panel of the multiple antenna panels;
a maximum number of uplink Multiple Input Multiple Output, MIMO, layers supported by each antenna panel of the multiple antenna panels;
correlation characteristic information for indicating a correlation between antenna ports included in the antenna panel;
switching delay information between different antenna panels of the multiple antenna panels; or
information related to whether the terminal device supports an uplink transmission via multiple antenna panels.

3. The method according to claim 2, wherein the power class comprises:
a maximum transmit power or maximum transmit power class supported by the terminal device; or,
a maximum transmit power or maximum transmit power class supported by each antenna panel of the multiple antenna panels; or,
a maximum transmit power or maximum transmit power class supported by the terminal device, and a maximum transmit power or maximum transmit power class supported by each antenna panel of the multiple antenna panels.

4. The method according to claim 3, wherein the relevant capability information further comprises:
power allocation information for allocating power among the multiple antenna panels of the terminal device; and
wherein the power allocation information comprises:
allocation method information for determining to allocate the maximum transmit power or maximum transmit power class supported by the terminal device to the multiple antenna panels according to a predefined allocation method or an instruction from the base station; and/or
an allocation coefficient for determining an allocation ratio of the maximum transmit power or maximum transmit power class of the terminal device among the multiple antenna panels of the terminal device.

5. The method according to any one of claims 2 to 4, wherein the transmission direction information supported by the antenna panel comprises:
information of the antenna panel that supports downlink reception; and/or,
information of the antenna panel that supports uplink transmission and downlink reception.

6. The method according to any one of claims 2 to 5, wherein the correlation characteristic information comprises:
the correlation characteristic information between different antenna ports within a single antenna panel; and/or,
the correlation characteristic information between antenna ports included in different antenna panels.

7. The method according to claim 6, wherein the correlation characteristic information indicates a correlation type, and different correlation types map to different correlation characteristics; and
wherein the correlation characteristics comprise at least one of:
fully correlated;
partially correlated; or
non-correlated.

8. The method according to any one of claims 2 to 7, wherein the switching delay information indicates a switching gap period or a switching delay class between activated antenna panels.

9. The method according to any one of claims 1 to 8, wherein the relevant capability information of the antenna panels within the terminal device is reported through at least one of following signaling:
Radio Resource Control, RRC, signaling;
Media Access Control-Control Element, MAC-CE; or
Uplink Control Information, UCI.

10. A method for processing information, performed by a base station, the method comprising:
receiving relevant capability information reported by a terminal device, wherein the relevant capability information indicates whether the terminal device supports an uplink Simultaneous Transmission via Multi-Panel, STxMP; and the terminal device is provided with multiple antenna panels.

11. The method according to claim 10, wherein the relevant capability information comprises at least one of:
a power class of the terminal device;
a number of physical antenna panels included in the terminal device;
transmission direction information supported by each antenna panel of the multiple antenna panels;
a maximum number of Sounding Reference Signal, SRS, ports supported by each antenna panel of the multiple antenna panels;
a maximum number of uplink Multiple Input Multiple Output, MIMO, layers supported by each antenna panel of the multiple antenna panels;
correlation characteristic information for indicating a correlation between antenna ports included in the antenna panel;
switching delay information between different antenna panels of the multiple antenna panels; or
information related to whether the terminal device supports an uplink transmission via multiple antenna panels.

12. The method according to claim 11, wherein the power class comprises:
a maximum transmit power or maximum transmit power class supported by the terminal device; or,
a maximum transmit power or maximum transmit power class supported by each antenna panel of the multiple antenna panels; or,
a maximum transmit power or maximum transmit power class supported by the terminal device, and a maximum transmit power or maximum transmit power class supported by each antenna panel of the multiple antenna panels.

13. The method according to claim 12, wherein the relevant capability information further comprises:
power allocation information for allocating power among the multiple antenna panels of the terminal device; and
wherein the power allocation information comprises:
allocation method information for determining to allocate the maximum transmit power or maximum transmit power class supported by the terminal device to the multiple antenna panels according to a predefined allocation method or an instruction from the base station; and/or
an allocation coefficient for determining an allocation ratio of the maximum transmit power or maximum transmit power class of the terminal device among the multiple antenna panels of the terminal device.

14. The method according to any one of claims 11 to 13, wherein the transmission direction information supported by the antenna panel comprises:
information of the antenna panel that supports downlink reception; and/or,
information of the antenna panel that supports uplink transmission and downlink reception.

15. The method according to any one of claims 11 to 13, wherein the correlation characteristic information comprises:
the correlation characteristic information between different antenna ports within a single antenna panel; and/or,
the correlation characteristic information between antenna ports included in different antenna panels.

16. The method according to claim 15, wherein the correlation characteristic information indicates a correlation type, and different correlation types map to different correlation characteristics; and
wherein the correlation characteristics comprise at least one of:
fully correlated;
partially correlated; or
non-correlated.

17. The method according to any one of claims 11 to 16, wherein the switching delay information indicates a switching gap period between activated antenna panels.

18. The method according to any one of claims 10 to 17, wherein the relevant capability information of the antenna panels within the terminal device is received through at least one of following signaling:
Radio Resource Control, RRC, signaling;
Media Access Control-Control Element, MAC-CE; or
Uplink Control Information, UCI.

19. A device for processing information, comprising:
a sending module configured to report relevant capability information to a base station, wherein the relevant capability information indicates whether a terminal device with multiple antenna panels supports an uplink Simultaneous Transmission via Multi-Panel, STxMP; and the terminal device is provided with multiple antenna panels.

20. The device according to claim 19, wherein the relevant capability information comprises at least one of:
a power class of the terminal device;
a number of physical antenna panels included in the terminal device;
transmission direction information supported by each antenna panel of the multiple antenna panels;
a maximum number of Sounding Reference Signal, SRS, ports supported by each antenna panel of the multiple antenna panels;
a maximum number of uplink Multiple Input Multiple Output, MIMO, layers supported by each antenna panel of the multiple antenna panels;
correlation characteristic information for indicating a correlation between antenna ports included in the antenna panel;
switching delay information between different antenna panels of the multiple antenna panels; or
information related to whether the terminal device supports an uplink transmission via multiple antenna panels.

21. The device according to claim 20, wherein the power class comprises:
a maximum transmit power or maximum transmit power class supported by the terminal device; or,
a maximum transmit power or maximum transmit power class supported by each antenna panel of the multiple antenna panels; or,
a maximum transmit power or maximum transmit power class supported by the terminal device, and a maximum transmit power or maximum transmit power class supported by each antenna panel of the multiple antenna panels.

22. The device according to claim 21, wherein the relevant capability information further comprises:
power allocation information for allocating power among the multiple antenna panels of the terminal device;
wherein the power allocation information comprises:
allocation method information for determining to allocate the maximum transmit power or maximum transmit power class supported by the terminal device to the multiple antenna panels according to a predefined allocation method or an instruction from the base station; and/or
an allocation coefficient for indicating a power allocation ratio among the multiple antenna panels within the terminal device.

23. The device according to any one of claims 20 to 22, wherein the transmission direction information supported by the antenna panel comprises:
information of the antenna panel that supports downlink reception; and/or,
information of the antenna panel that supports uplink transmission and downlink reception.

24. The device according to any one of claims 20 to 23, wherein the correlation characteristic information comprises:
the correlation characteristic information between different antenna ports within a single antenna panel; and/or,
the correlation characteristic information between antenna ports included in different antenna panels.

25. The device according to claim 24, wherein the correlation characteristic information indicates a correlation type, and different correlation types map to different correlation characteristics; and
wherein the correlation characteristics comprise at least one of:
fully correlated;
partially correlated; or
non-correlated.

26. The device according to any one of claims 20 to 25, wherein the switching delay information indicates a switching gap period or a switching delay class between activated antenna panels.

27. The device according to any one of claims 19 to 26, wherein the relevant capability information of the antenna panels within the terminal device is reported through at least one of following signaling:
Radio Resource Control, RRC, signaling;
Media Access Control-Control Element, MAC-CE; or
Uplink Control Information, UCI.

28. A device for processing information, comprising:
a receiving module configured to receive relevant capability information reported by a terminal device, wherein the relevant capability information indicates whether the terminal device supports an uplink Simultaneous Transmission via Multi-Panel, STxMP; and the terminal device is provided with multiple antenna panels.

29. The device according to claim 28, wherein the relevant capability information comprises at least one of:
a power class of the terminal device;
a number of physical antenna panels included in the terminal device;
transmission direction information supported by each antenna panel of the multiple antenna panels;
a maximum number of Sounding Reference Signal, SRS, ports supported by each antenna panel of the multiple antenna panels;
a maximum number of uplink Multiple Input Multiple Output, MIMO, layers supported by each antenna panel of the multiple antenna panels;
correlation characteristic information for indicating a correlation between antenna ports included in the antenna panel;
switching delay information between different antenna panels of the multiple antenna panels; or
information related to whether the terminal device supports an uplink transmission via multiple antenna panels.

30. The device according to claim 29, wherein the power class comprises:
a maximum transmit power or maximum transmit power class supported by the terminal device; or,
a maximum transmit power or maximum transmit power class supported by each antenna panel of the multiple antenna panels; or,
a maximum transmit power or maximum transmit power class supported by the terminal device, and a maximum transmit power or maximum transmit power class supported by each antenna panel of the multiple antenna panels.

31. The device according to claim 30, wherein the relevant capability information further comprises:
power allocation information for allocating power among the multiple antenna panels of the terminal device;
wherein the power allocation information comprises:
allocation method information for determining to allocate the maximum transmit power or maximum transmit power class supported by the terminal device to the multiple antenna panels according to a predefined allocation method or an instruction from a base station; and/or
an allocation coefficient for indicating a power allocation ratio among the multiple antenna panels within the terminal device.

32. The device according to any one of claims 28 to 31, wherein the transmission direction information supported by the antenna panel comprises:
information of the antenna panel that supports downlink reception; and/or,
information of the antenna panel that supports uplink transmission and downlink reception.

33. The device according to any one of claims 28 to 32, wherein the correlation characteristic information comprises:
the correlation characteristic information between different antenna ports within a single antenna panel; and/or,
the correlation characteristic information between antenna ports included in different antenna panels.

34. The device according to claim 33, wherein the correlation characteristic information indicates a correlation type, and different correlation types map to different correlation characteristics; and
wherein the correlation characteristics comprise at least one of:
fully correlated;
partially correlated; or
non-correlated.

35. The device according to any one of claims 28 to 34, wherein the switching delay information indicates a switching gap period between activated antenna panels.

36. The device according to any one of claims 28 to 35, wherein the relevant capability information of the antenna panels within the terminal device is received through at least one of following signaling:
Radio Resource Control, RRC, signaling;
Media Access Control-Control Element, MAC-CE; or
Uplink Control Information, UCI.

37. A communication device, comprising a processor, a transceiver, a memory and an executable program stored in the memory and executable by the processor, wherein the processor performs the method according to any one of claims 1 to 9 or 10 to 18 when executing the executable program.

38. A computer storage medium, storing an executable program that, when executed by a processor, causes the processor to perform the method according to any one of claims 1 to 9 or 10 to 18.
